Europäisches Patentamt

European Patent Office

Office européen des brevets

(11) Veröffentlichungsnummer: **0 228 510**
A2

(12) **EUROPÄISCHE PATENTANMELDUNG**

(21) Anmeldenummer: 86113165.4

(22) Anmeldetag: 24.09.86

(51) Int. Cl.⁴: **G 01 F 23/28**

(30) Priorität: 10.12.85 DE 3543529

(43) Veröffentlichungstag der Anmeldung:
15.07.87 Patentblatt 87/29

(84) Benannte Vertragsstaaten:
DE FR GB SE

(71) Anmelder: VDO Adolf Schindling AG
Gräfstrasse 103
D-6000 Frankfurt/Main(DE)

(72) Erfinder: Ziegler, Klaus
Am Hofrain 8
D-7743 Furtwangen 6(DE)

(74) Vertreter: Klein, Thomas, Dipl.-Ing. (FH)
Sodener Strasse 9 Postfach 6140
D-6231 Schwalbach a. Ts.(DE)

(54) Einrichtung zur Erfassung des Füllstandes von insbesondere einer Flüssigkeit in einem Behälter.

(57) Die Erfindung bezieht sich auf eine Einrichtung zur Erfassung des Füllstandes in einem Behälter. Sie besitzt einen fest auf einer Membran 5 angeordneten elektromechanischen Wandler 4, durch den die Membran 5 in Schwingungen versetzbar ist. Durch elektrische Mittel sind die Schwingungen der Membran 5 feststellbar. Die Membran 5 besitzt eine Halterung 1 an der die Membran 5 über ein zylindrisches Zwischenstück 6 befestigt ist. Die Wandstärke des zylindrischen Zwischenstücks 6 beträgt ein Mehrfaches der Dicke der Membran 5.

EP 0 228 510 A2

*I*

VDO Adolf Schindling AG

Gräfstraße 103
6000 Frankfurt/Main

G-R Kl-kl / 1865

31. Okt. 1985

## Einrichtung zur Erfassung des Füllstandes von insbesondere einer Flüssigkeit in einem Behälter

Die Erfindung bezieht sich auf eine Einrichtung zur Erfassung des Füllstandes von insbesondere einer Flüssigkeit in einem Behälter, mit einem fest auf einer Membran angeordneten elektromechanischen Wandler, durch den die Membran in Schwingungen versetzbar ist und elektrischen Mitteln zur Feststellung der Schwingungen der Membran, sowie mit einer Halterung der Membran an der die Membran über ein zylindrisches Zwischenstück befestigt ist.

Derartige bekannte Einrichtungen dürfen keine sehr hohe Empfindlichkeit gegen die verschiedensten äußeren Einflüsse, die auf sie einwirken, besitzen. Diese Einflüsse dürfen die Funktion der Einrichtung nicht beeinträchtigen. Zu solchen Einflüssen gehören z.B. Verspannungen der Membran, die durch Temperaturschwankungen oder durch Deformationen bei der Befestigung des zylindrischen Zwischenstücks bzw. der Halterung hervorgerufen werden. Weiterhin kann es auch zu akustischen Beeinträchtigungen der Membran kommen, die zu Einbußen des Meßeffekts führen können.

Aufgabe der Erfindung ist es daher, eine Einrichtung nach dem Oberbegriff zu schaffen, die auf einfache und kostengünstige Weise eine hohe Meßempfindlichkeit bei gleichzeitiger Unempfindlichkeit gegen o.g. äußeren Einflüsse aufweist.

Diese Aufgabe wird erfindungsgemäß dadurch gelöst, daß die Wandstärke des zylindrischen Zwischenstücks ein Mehrfaches der Dicke der Membran beträgt. Diese Ausbildung führt zu einer großen Steifigkeit und großen schwer schwingungsanregbaren Masse des zylindrischen Zwischenstücks, wodurch äußere Einflüsse weitgehend von der empfindlichen Membran ferngehalten werden. Gleichzeitig wird auch eine Schwingungsübertragung von der Membran auf das zylindrische Zwischenstück weitgehend vermieden, da der Übergangsquerschnitt von der Membran zum Zwischenstück nur der geringen Dicke der Membran entspricht. Damit wird die Schwingungsenergie des elektromechanischen Wandlers, der ein piezoelektrisches Bauelement sein kann, auf die Membran konzentriert, ohne daß es zu einem ins Gewicht fallenden Energieentzug von dem Meßglied kommen kann. Somit wird ein optimaler Meßeffekt ermöglicht.

Vorzugsweise ist dabei die Wandstärke des Zwischenstücks mindestens um den Faktor zwei bis drei größer als die Dicke der Membran.

Besonders günstig zur Entkopplung der Membran von den anderen Bauteilen der Einrichtung ist es, wenn die Länge des Zwischenstücks ein Mehrfaches der Wandstärke des Zwischenstücks beträgt. Je länger das zylindrische Zwischenstück ist, um so geringer sind auch störende Einflüsse.

Das zylindrische Zwischenstück und die Membran können z.B. ein einteiliges Drehteil sein. Es kann aber auch die Membran durch Schweißen mit dem zylindrischen Zwischenstück verbunden sein.

Eine Schweißverbindung hoher Gleichmäßigkeit an allen Stellen wird dann erreicht, wenn die Membran durch Laserschweißen mit dem zylindrischen Zwischenstück verbunden ist.

Sowohl ein Ausgleich von Herstellungstoleranzen als auch ein Abgleich auf Sollwerte der Einrichtung ist auf einfache Weise dadurch möglich, daß die Einrichtung durch Materialabtrag von der mit dem zylindrischen Zwischenstück verbundenen Membran abgleichbar ist. Dazu ist besonders ein gezielter Materialabtrag mittels Laser durch Erodieren oder durch Schleifen geeignet.

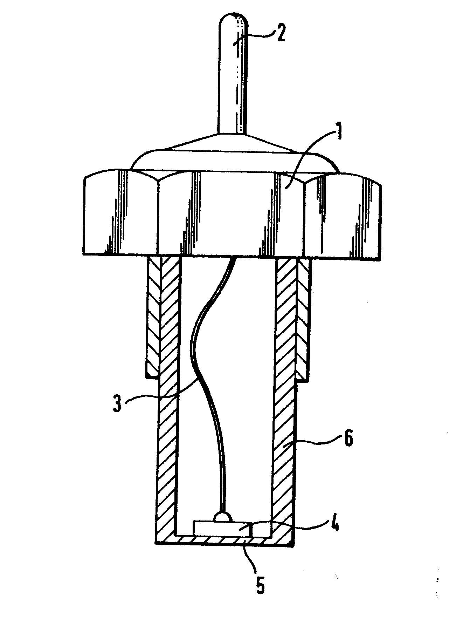

Ein Ausführungsbeispiel der Erfindung ist in der Zeichnung dargestellt und wird im folgenden näher beschrieben. Die einzige Figur der Zeichnung zeigt eine Einrichtung im Schnitt. Diese Einrichtung weist eine Halterung 1 auf, mit der die Einrichtung an einer nicht dargestellten Wand eines Flüssigkeitsbehälters befestigbar ist. An der Halterung 1 ist ein nach außerhalb des Flüssigkeitsbehälters ragender elektrischer Anschluß 2 angeordnet, der über eine flexible elektrische Leitung 3 mit einem elektromechanischen Wandler 4, einem piezoelektrischen Bauelement, verbunden ist.

Im eingebauten Zustand ragt der zum Wandler 4 gerichtete Teil der Einrichtung in den Flüssigkeitsbehälter. Der Wandler 4 ist fest auf einer Membran 5 angeordnet, die über ein zylindrisches Zwischenstück 6 mit der Halterung 1 verbunden ist. Dabei ist der Raum innerhalb des Zwischenstücks gegenüber dem Innenraum des Flüssigkeitsbehälters dicht abgeschlossen.

Die Wandstärke des zylindrischen Zwischenstücks 6 ist relativ groß und beträgt etwa das vierfache der Dicke der Membran 5 während die Länge des Zwischenstücks 6 etwa das 14fache der Wandstärke des Zwischenstücks 6 beträgt.

Sowohl durch die große Entfernung der Membran 5 von der Halterung 1 als auch durch die relativ große Wandstärke und Masse des zylindrischen Zwischenstücks 6 werden Beeinträchtigungen, die zu einem Schwingungsenergieverlust an der Membran 5 und damit zu einer Reduzierung der Empfindlichkeit der Einrichtung führen könnten, vermieden.

VDO Adolf Schindling AG

Gräfstraße 103
6000 Frankfurt/Main
G-R Kl-kl / 1865
31. Okt. 1985

## Patentansprüche

1. Einrichtung zur Erfassung des Füllstandes von insbesondere einer Flüssigkeit in einem Behälter, mit einem fest auf einer Membran angeordneten elektromechanischen Wandler, durch den die Membran in Schwingungen versetzbar ist, und elektrischen Mitteln zur Feststellung der Schwingungen der Membran, sowie mit einer Halterung der Membran, an der die Membran über ein zylindrisches Zwischenstück befestigt ist, dadurch gekennzeichnet, daß die Wandstärke des zylindrischen Zwischenstücks (6) ein Mehrfaches der Dicke der Membran (5) beträgt.

2. Einrichtung nach Anspruch 1, dadurch gekennzeichnet, daß die Länge des Zwischenstücks (6) ein Mehrfaches der Wandstärke des Zwischenstücks (6) beträgt.

3. Einrichtung nach einem der vorhergehenden Ansprüche, dadurch gekennzeichnet, daß das zylindrische Zwischenstück (6) und die Membran (5) ein einteiliges Drehteil sind.

4. Einrichtung nach einem der Ansprüche 1 und 2, dadurch gekennzeichnet, daß die Membran durch Schweißen mit dem zylindrischen Zwischenstück verbunden ist.

5. Einrichtung nach Anspruch 4, dadurch gekennzeichnet, daß die Membran durch Laserschweißen mit dem zylindrischen Zwischenstück verbunden ist.

6. Einrichtung nach einem der vorhergehenden Ansprüche, dadurch gekennzeichnet, daß die Einrichtung durch Materialabtrag von der mit dem zylindrischen Zwischenstück verbundenen Membran abgleichbar ist.